# EUROPÄISCHE PATENTSCHRIFT

(11) **EP 2 567 549 B1**
(45) Veröffentlichungstag und Bekanntmachung des Hinweises auf die Patenterteilung: **30.05.2018**
(21) Anmeldenummer: 11715171.2
(22) Anmeldetag: 06.04.2011
(51) Int. Cl.: H04Q 9/00, H04L 29/08, H04W 52/02

(54) **EINRICHTUNG SOWIE VERFAHREN ZUR ÜBERTRAGUNG VON MESSSIGNALEN IN RÄUMLICH AUSGEDEHNTEN VERSORGUNGSNETZEN**
DEVICE AND METHOD FOR TRANSMITTING MEASUREMENT SIGNALS IN SPATIALLY EXTENSIVE SUPPLY NETWORKS
DISPOSITIF ET PROCÉDÉ DE TRANSMISSION DE SIGNAUX DE MESURE SUR DES RÉSEAUX D'ALIMENTATION ÉTENDUS DANS L'ESPACE

(30) Priorität: 30.04.2010 DE 102010019086
(43) Veröffentlichungstag der Anmeldung: 13.03.2013
(73) Patentinhaber: ABB Schweiz AG, 5400 Baden (CH)
(72) Erfinder: BLANK, Frederik, 69121 Heidelberg (DE); GAUDER, Markus, 68766 Hockenheim (DE); SCHMIDT, Werner A., 68542 Heddesheim (DE); LAUXTERMANN, Stefan, 32457 Porta Westfalica (DE)
(74) Vertreter: Marks, Frank
(86) Internationale Anmeldenummer: PCT/EP2011/001703
(87) Internationale Veröffentlichungsnummer: WO 2011/134589

(56) Entgegenhaltungen:
- EP-A2- 2 086 247
- WO-A1-2009/106095
- WO-A2-03/010911
- DE-A1-102007 030 597
- US-A- 4 517 468

## Beschreibung

Die Erfindung betrifft eine Einrichtung sowie ein Verfahren zur Übertragung von Messsignalen in räumlich ausgedehnten Versorgungsnetzen mit wenigstens einem Sensor zur Übertragung von statistischen Kennwerten oder Messwerten zum Betriebsverhalten an wenigstens eine Leitwarte, die zur Überwachung und Steuerung des jeweiligen Versorgungsnetzes dient.

### Stand der Technik

Um den aktuellen Zustand von Versorgungsnetzen zu überwachen, insbesondere von räumlich ausgedehnten Versorgungsnetzen, insbesondere für strömende Medien, wie zum Beispiel für die Wasser-, Gas- oder Ölversorgung, ist eine Vielzahl von Messgeräten vorgesehen, die an exakt definierten Positionen installiert sind, um aktuelle Messwerte wie zum Beispiel den Druck, den Durchfluss oder die Fließgeschwindigkeit zu messen und an eine Leitwarte zu übermitteln.

Aus der DE 10 2007 030 597 A1 ist eine Sensorvorrichtung für den Einsatz in Umgebungen, die für menschlichen Eingriff nicht geeignet sind mit mindestens einem Sensor, einem Prozessor und mit einem konfigurierbaren Vorprozessor, welcher mit dem Sensor und mit dem Prozessor verbunden ist und ausgebildet ist, die Messdaten des Sensors aufzunehmen und vorzuverarbeiten, das Vorliegen mindestens eines ersten vorbestimmten Kriteriums zu überprüfen und prüfergebnisabhängig den Prozessor zu aktivieren, welcher bei Erfüllen eines zweiten Kriteriums dafür eingerichtet ist den Vorprozessor automatisiert umzukonfigurieren.

Die Leitwarte ist üblicherweise ein zentraler oder aber dezentraler Kontrollraum, mit entsprechenden Einrichtungen von dem aus das Versorgungsnetz geführt wird, das heißt, dass von hier aus die Überwachung und Steuerung des Betriebs des Netzes erfolgt. Im Kontrollraum werden die übermittelten Messsignale und Messwerte entsprechend weiterverarbeitet und visualisiert.

Aufgrund der häufig großen räumlichen Ausdehnung von Versorgungsnetzen ist die Datenübermittlung der vielen Sensoren häufig nicht per Kabel, sondern per Funk an die Leitwarte vorgesehen. Hierdurch entfällt die Verlegung und Instandhaltung von kostspieligen Kabelinstallationen entlang der Versorgungsleitungen.

Die jeweils von den Sensoren ermittelten Messwerte werden per Funk, zum Beispiel mittels GPRS (General Packet Radio Service zu Deutsch: "Allgemeiner paketorientierter Funkdienst") an einen kompatiblen Empfänger übermittelt, der diese dann an die Leitwarte weiterleitet.

Die Stromversorgung der Messgeräte sowie Sende- und Empfangsgeräte ist im Allgemeinen örtlich per Batterie oder aber durch Versorgung aus in der Umgebung des Sensors gewonnener Energie, zum Beispiel Solarstrom, vorgesehen.

Zur Einsparung von Energie werden die zu übertragenden Einzeldaten in Datenpakete zusammengefasst und/oder weiterverarbeitet, es werden zum Beispiel Mittelwerte gebildet, komprimiert und per Funk vorzugsweise zu festgelegten Zeiten, beispielsweise alle 30 Minuten, übermittelt.

Dies hat allerdings den Nachteil, dass aktuelle Informationen über den Netzzustand nur zu bestimmten Zeitpunkten vorhanden sind und bei Problemen im Netz eine Verzögerung bei der Informationsübermittlung auftritt.

Andererseits würde eine unangemessene Erhöhung der Datenübertragungshäufigkeit bei rein batteriebetriebenen Sensoren dazu führen, dass die Batteriekapazität früher erschöpft wäre und die Batterien daher häufiger ausgetauscht werden müssten, so dass ein Teil der Instandhaltungsmitarbeiter nur zu diesem Zweck eingesetzt würde und für weitere Instandhaltungsmaßnahmen nicht eingesetzt werden könnte. Die hierdurch verursachten zusätzlichen Personalaufwendungen oder zeitlichen Verzögerungen bei der Durchführung derartiger Maßnahmen stellen einen erheblichen Kostenfaktor dar.

Ein anderer Aspekt, der in diesem Zusammenhang eine Rolle spielt und zu berücksichtigen ist, betrifft die Häufigkeit von eingesetzten Sensoren. Während in zahlreichen, insbesondere in bereits seit längerem bestehenden Versorgungssystemen die Häufigkeit und damit die Verteilung von Sensoren wegen der seinerzeitigen Anschaffungs- und Wartungskosten begrenzt ist, sind in neueren installierten Systemen, insbesondere in weniger großen, räumlich ausgedehnten Versorgungssystemen, wegen der in jüngerer Zeit mittlerweile vergleichsweise geringen Kosten für die Anschaffung und den Betrieb von Sensorsystemen deutlich mehr Sensoren vorzufinden. Insbesondere dieser Umstand hat dazu geführt, dass mehr und mehr Sensorik im Feld zum Einsatz kommt.

Die dabei in die Leitwarte übertragenen Datenmengen sind einerseits sehr groß, aber andererseits auch häufig von schlechter Qualität, was zur Folge hat, dass die Daten für Analysezwecke nicht oder nur sehr eingeschränkt genutzt werden können.

Ausgehend von diesem Stand der Technik ist es Aufgabe der Erfindung eine neue Datenübertragungsstrategie zu entwickeln, welche eine vereinfachte und wenig kostenintensive Datenübertragung ermöglicht und welche die aufgezeigten Nachteile vermeidet.

Diese Aufgabe wird erfindungsgemäß mit den kennzeichnenden Merkmalen des Anspruchs 1 gelöst. Dementsprechend ist die Übertragungshäufigkeit von Messsignalen nicht wie bisher statisch, sondern dynamisch vorgesehen. Hierbei ist der grundlegende Ansatz, die richtigen Daten zum richtigen Zeitpunkt in der richtigen Quantität und Qualität für Analysezwecke zur Verfügung zu haben.

Gemäß der Erfindung sind die Messgeräte hierfür mit einer Auswerteeinheit versehen, welche es jedem Sensor ermöglicht die gemessenen Signalverläufe und -trends zu analysieren. Hierbei beschränken sich die verwendeten Auswerte-Algorithmen nicht nur auf verschiedene Limit-Überwachungen, sondern schließen komplexe statistische und modelbasierte Signalauswertungs- und Klassifikationsverfahren ein.

In weiterer Verbesserung der Erfindung werden ausgehend von dem Ergebnis der Auswertung die Signalverläufe verschiedenen Klassen zugeordnet. Um dies beispielsweise anhand von Versorgungsnetzen für strömende Medien zu erläutern, ist es möglich, das Kriterium Druck wie folgt zu klassifizieren: "Druckverlauf normal", "Druck außerhalb des erlaubten Bereichs", "geringe Druckänderung", "große anomale Druckänderung.

Entsprechend einer vorteilhaften Weiterbildung der Erfindung wird in Abhängigkeit dieser Klassifizierung vorzugsweise jedem Signalverlauf eine Ülbertragungshäufigkeit zugeordnet. Liegen die Signalmerkmale zum Beispiel in der Klasse "Druckverlauf normal", so kann die Sendehäufigkeit weiter reduziert werden, um Energie zu sparen. Die gemessenen Werte werden dann lediglich im Sensorspeicher zwischengespeichert und nach einer festgelegten Zeit jeweils versendet.

Gemäß einer weiteren Ausführungsform der Erfindung ist es aber auch vorgesehen, dass im Falle, dass ein Signalverlauf einen großen fallenden Gradienten aufweist, was dessen Zuordnung zu der Klasse "große anomale Änderung" zur Folge hat, der jeweilige Sensor die Signale in kürzeren Zeitabständen überträgt. Dann werden die Messwerte zum Beispiel nicht mehr in Abständen von 30 Minuten wie vorher, sondern beispielsweise alle 10 Minuten oder noch kürzer zum Kontrollraum übermittelt.

Die Übermittlung von Daten in entsprechend verkürzten Zeiträumen liefert auch ein wesentlich genaueres Bild der aktuellen Situation im Versorgungsnetz, da typischerweise nur Durchschnittswerte, zum Beispiel über einen Zeitraum von 15 min, die durch die Sensoren ermittelt werden, an das Leitsystem übertragen werden. Je kürzer das Zeitintervall der Signalübertragung ist, umso genauer ist das Zustandsbild.

Dies hat den Vorteil, dass für den Betrieb oder die Sicherheit schwerwiegende Änderungen im betreffenden Versorgungsnetz schneller festgestellt werden können, da Messwerte im Fehlerfall häufiger an die Leitwarte übermittelt werden.

Gemäß einer weiteren bevorzugten Ausgestaltung der Erfindung übermittelt der Sensor die ermittelte Klassifizierungsinformation zusätzlich zu dem übermittelten Signal an ein in der Leitwarte befindliches Entscheidungsunterstützungssystem.

Dieses so bezeichnete Entscheidungsunterstützungssystem kann gemäß einer Ausgestaltung der Erfindung im einfachsten Fall ein konventionelles Alarmsystem mit Alarmgrenzen und entsprechender Fehlermeldung sowie einfachen Anweisungen zum Beheben des Problems sein, welches jedes Signal nur für sich einzeln betrachtet.

Hierbei erweist es sich als vorteilhaft, dass das Entscheidungsunterstützungssystem den Systemzustand in seiner gesamten Komplexität analysiert und entsprechend den einzelnen und fusionierten Signalmesswerten, den einzelnen Systemzuständen, den daraus gewonnenen Informationen und dem eingelernten Expertenwissen das Bedienpersonal gezielt durch Aktionsvorschläge unterstützt.

Entsprechend einer weiteren Verbesserung der Erfindung ist vorgesehen, dass darüber hinaus zusätzlich auch Fehler- und Diagnoseinformationen der Sensoren sowie Zustandsinformationen der Sensoren, wie zum Beispiel der Batteriestatus an das Leit- und Entscheidungsunterstützungssystem übermittelt und dort weiterverarbeitet werden.

Eine weitere vorteilhafte Ausgestaltung der Erfindung sieht vor, dass das Leit- und Entscheidungsunterstützungssystem neben der Auswertung von gemessenen Signalinformationen, zum Beispiel die Identifizierung eines defekten Sensors oder dessen abnehmende Batterieleistung, auch Arbeitsaufträge generiert.

Hierfür ist es vorteilhaft, dass die Sensoren gemäß einer weiteren Ausgestaltung der Erfindung jeweils eine eigens zugeordnete Signalvorverarbeitungs- und Diagnoseeinheit besitzen, die in der Lage ist, fehlerhafte Signalzustände aus den gemessenen Signalen zu erkennen und zu klassifizieren sowie den Zustand des Sensors einschließlich der daran angeschlossenen Komponenten, wie Batterien, zu überwachen.

Hierbei erweist es sich als besonders vorteilhaft, dass durch geeignete Wahl der Klassifikationsmerkmale und Klassifikationsgrenzen unzutreffende oder unzweckmäßige Klassifizierungen und damit fehlerbehaftete Klassifikationen vermieden werden. Anderenfalls würde dies zu einer unerwünscht häufigen Signalübertragung führen, was die Batterielebensdauer des Sensors deutlich verkürzen würde. Unter Klassifikationsmerkmalen sind die aus dem gemessenen Signal extrahierten und / oder verarbeiteten Signaleigenschaften zu verstehen.

Zwar ist es für den Normalbetrieb nicht zwingend notwendig, dass die hier beschriebenen Sensoren auch Daten empfangen können. Es ist jedoch von Vorteil, wenn eine bidirektionale Kommunikation zwischen der Leitwarte und den Sensoren stattfinden kann. Dies hat den Vorteil, dass zum Beispiel die Sensorkonfiguration auch per Fernwartung aus der Leitwarte heraus erfolgen kann, das heißt die Konfiguration der Sendehäufigkeit, der Klassifikationsgrenzen, der Klassifikationsmerkmale und andere.

Ein weiterer Vorteil besteht überdies darin, dass, sobald ein von einem Sensor generierter Alarm vom Bedienpersonal erkannt und bestätigt wurde, dies an den Sensor zurückgemeldet wird, damit dieser die Sendehäufigkeit wieder reduzieren kann, um Energie zu sparen.

Um die Kapazität der Batterie zu schonen, das heißt, um ihre Lebensdauer zu erhöhen, sind in erfinderischer Weiterbildung solche Sensoren vorgesehen, bei denen zwischen mehreren Sende- und Empfangsoptionen gewählt werden kann. Demgemäss sind sowohl die Sende- und Empfangshäufigkeit als auch die Empfangsdauer einstellbar.

Beispielsweise kann im Normalbetrieb der Empfang alle **x** Minuten für eine Dauer von y Minuten vorgesehen sein oder zum Beispiel erfolgt der Empfang für **z** Minuten nach dem Senden. Hingegen ist der Empfang bei im Signal und/oder im Sensor erkannten Fehler (**n**) für eine Dauer von **y_{F}** bzw. **z_{F}** Minuten vorgesehen.

Weiterhin ist eine Synchronisationsroutine zwischen Sensor und Leitsystem zweckmäßigerweise vorgesehen, die es erlaubt, Konfigurations-Informationen aus dem Leitsystem zuverlässig zu übermitteln.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: einen Sensor gemäß der Erfindung in schematischer Darstellung mit Angabe der einzelnen Abläufe
- Fig. 2: ein Versorgungsnetz mit Sensoren und einer Leitwarte.

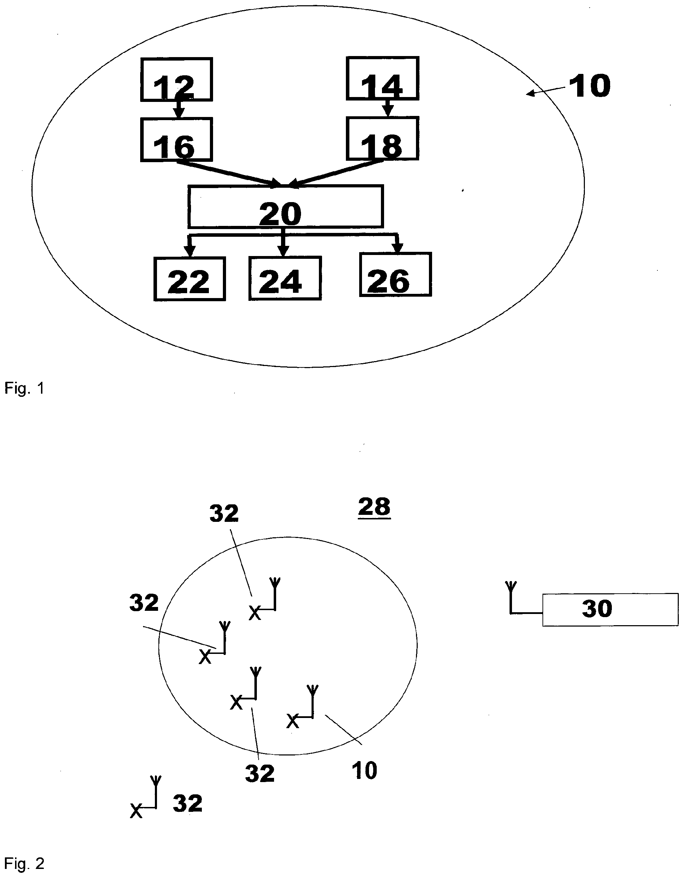

In Fig. 1 ist ein Sensor 10 gemäß der Erfindung in schematischer Darstellung als Oval wiedergegeben, wobei in dem Oval einzelne, mit Ziffern gekennzeichnete Ablaufpunkte angegeben sind. Diese Ablaufpunkte entsprechen einem Flussplan mit einer Entscheidungsbox, in welcher die Entscheidung über das weitere Vorgehen anhand der hier eingegangenen Messwerte beziehungsweise Informationen zu treffen ist.

Hierbei ist mit 12 das gemessene Sensorsignal bezeichnet, welches an die nicht näher dargestellte Auswerteeinheit 20 in dem Sensor 10 gelangt. Mit Bezugsziffer 14 sind Sensordiagnose-Informationen bezeichnet.

In Box 16 erfolgt die Klassifikation des vom Sensor 10 aufgenommenen Sensorsignals, wobei hierzu in Box 18 entsprechende Klassifikation Diagnoseinformationen erfasst und ausgewertet werden.

In der Box 20 ist die in dem Sensor vorgesehene Auswerteeinheit angeordnet, welche die Entscheidung vorbereitet und umgesetzt, ob eine automatische Erhöhung oder Verminderung der Übertragungshäufigkeit der zu übertragenden Signale erfolgen soll.

Dementsprechend steht die Box 22 für die Verminderung der Übertragungshäufigkeit und Zwischenspeicherung der Messwerte und Diagnoseinformationen, während Box 24 für gleichbleibende Übertragungshäufigkeit von Signal und Diagnoseinformationen steht und Box 26 für die Erhöhung der Übertragungshäufigkeit von Signal und Diagnoseinformationen .

In Fig. 2 ist in schematischer Darstellung ein Versorgungsnetz 28 mit Sensoren 10 beziehungsweise Sensoren mit Übertragungseinheit 32 sowie mit einer Leitwarte 30 gezeigt, um das Zusammenwirken der einzelnen Sensoren 10, 32 mit der Leitwarte 30 zu verdeutlichen.

Bei auftretenden Störungen im Versorgungsnetz, wie zum Beispiel in Wasserversorgungsnetzen mögliche Leckagen, Rohrbrüche oder sehr hohe Entnahmen, pflanzen sich diese mitunter zeitlich verzögert über die Versorgungsleitungen, wie zum Beispiel entlang der zusammenhängenden Wasserversorgungsleitungen, fort. Dabei kommt es häufig vor, dass diese Störungen erst von einem Sensor erkannt und dann zeitlich verzögert auch von weiteren Sensoren diagnostiziert werden. Durch signal- oder modellbasierte Methoden ist es hierbei möglich, aus den gemessenen beziehungsweise simulierten Signalen Rückschlüsse auf die aktuelle Störung zu ziehen und die Störungsquelle zu lokalisieren.

Wird von einem Sensor eine Störung oder Anomalität diagnostiziert, ist es je nach Klassifikation sinnvoll nicht nur die Übertragungshäufigkeit des einen Sensors zu erhöhen, sondern auch die der benachbarten Sensoren; auch wenn diese aufgrund der Zeitverzögerung bei der Ausbreitung der Störung noch selbst keine Störung diagnostiziert haben. Hierdurch ist eine zuverlässigere Erkennung, schnellere Störungslokalisierung und Intervention als bisher möglich.

Als benachbarte Sensoren werden solche Sensoren bezeichnet, die zwar örtlich weit voneinander getrennt sein können, aber zum Beispiel durch eine gemeinsame Wasserleitung, durch die ein Medium fließt, miteinander verbunden sind und eine gleiche oder physikalisch ähnliche Größe messen. Die Grundlage für ein intelligentes Sensornetz ist die Modellierung der Zusammenhänge zwischen den Sensorpositionen und dem Netz, welche entweder im Leitsystem oder auch in der Sensor-Auswerteeinheit abgelegt sein können.

Zum Beispiel ist es möglich, dass Sensoren sich miteinander synchronisieren, sei es direkt oder über das Leitsystem, wobei sie stets dann senden, wenn die benachbarten Sensoren nicht senden, um lange Pausen zu vermeiden. Dies bedeutet, dass die Messsignale von zwei benachbarten Sensoren zum Beispiel nicht immer um die volle und halbe Stunde im Leitsystem eintreffen, sondern im Normalbetrieb Sensor eins zum Beispiel immer zur vollen und halben Stunde sendet, während der benachbarte Sensor zwei im Normalbetrieb immer um eine Viertelstunde hierzu versetzt sendet, das heißt zur viertel und dreiviertel Stunde. Somit wird zum Beispiel im Normalbetrieb zu jeder vollen Stunde nicht von jedem im Netz vorgesehenen Sensor mindestens ein Messwert empfangen, sondern die betreffenden Signale der diversen Sensoren treffen stets zeitversetzt ein. Das bedeutet, dass die Leitwarte häufiger aktuelle Messsignale empfängt, die aber nur einen Teil der Sensoren im Netz repräsentieren. Aus diesen aktuellen Messwerten kann aber erfahrenes Bedienpersonal zumindest teilweise erkennen, ob das gesamte Netz in seinem zulässigen Normalbereich arbeitet.

Die Kommunikation zur Aktivierung von benachbarten Sensoren kann entweder direkt zwischen den Sensoren stattfinden oder durch das Leitsystem. Die Kommunikation über das Leitsystem hat den Vorteil, dass vorhandene Kommunikationsstrecken ausgenutzt werden können sowie zusätzliche Informationen über benachbarte Sensorpositionen, Leitungsnetz, Versorgungsbereiche und Störungsausbreitungsrichtungen vorhanden sind. Die Konfiguration welche benachbarten Sensoren mit welcher Übertragungshäufigkeit bei welchen Störungen wie lange aktiv sind, kann bei einer Kommunikation mittels des Leitsystems leichter durchgeführt und dynamisch angepasst werden. Zudem sind dem Leitsystem die Empfangsfenster der einzelnen Sensoren zur Datenübermittlung bekannt.

Es ist jedoch auch möglich, dass Sensoren untereinander Informationen austauschen, insbesondere wenn sie untereinander in Funkreichweite sind, wobei die Daten ohne direkte Ausnutzung der Kommunikationsinfrastruktur über ein möglicherweise vorhandenes Leitsystem dann von einem zum Beispiel zentralen Sensor an ein angebundenes Leitsystem weitergeleitet werden. Dies kann je nach Einsatz bezüglich der benötigten Sende- und Empfangsenergie oder den Kommunikationskosten vorteilhaft sein, da zumindest zum Teil lokale Funkprotokolle energieeffizienter sind als eine Übertragung zur Leitwarte und auch bei der Übertragung kostengünstiger sein können.

Die Erhöhung der Übertragungshäufigkeit verringert zwar die Batterielebensdauer, hat aber den Vorteil, dass Störungen schneller erkannt und damit auch rascher behoben werden können, was zu einem Anstieg der Versorgungsqualität führt.

Hier gilt es, das geeignete Gleichgewicht zu finden, was wiederum durch eine flexible Konfiguration der Sensoren möglich ist. Je nach Integrationsgrad der Sensoren in das Leitsystem, kann die Konfiguration der Sensoren direkt aus dem Leitsystem heraus erfolgen oder die Sensoren können durch eine Zusatzsoftware fernkonfiguriert werden.

Die vorliegende Erfindung umfasst dabei auch beliebige Kombinationen bevorzugter Ausführungsformen sowie einzelner Ausgestaltungsmerkmale oder Weiterbildungen, sofern diese sich nicht gegenseitig ausschließen.

### Bezugszeichenliste

- 10: Sensor
- 12: Gemessenes Sensorsignal
- 14: Sensordiagnose-Information
- 16: Klassifikation Sensorsignal
- 18: Klassifikation Diagnoseinformation
- 20: Auswerteeinheit zur Entscheidung bezüglich automatischer Erhöhung oder Verminderung der Übertragungshäufigkeit
- 22: Verminderung der Übertragungshäufigkeit und Zwischenspeicherung der Messwerte und Diagnoseinformationen
- 24: Gleichbleibende Übertragungshäufigkeit (Signal + Diagnoseinformationen)
- 26: Erhöhung der Übertragungshäufigkeit (Signal + Diagnoseinformationen)
- 28: Versorgungsnetz
- 30: Leitwarte
- 32: Sensor mit Übertragungseinheit

## Patentansprüche

1. Einrichtung zur Überwachung des Zustandes eines räumlich ausgedehnten Versorgungsnetzes (28) mit Sensoren (10) zur Übertragung von aktuellen Messwerten zum Betriebsverhalten an wenigstens eine Leitwarte, die zur Überwachung und Steuerung des Versorgungsnetzes (28) dient, wobei
• an verschiedenen Positionen je ein Sensor (10) für die örtliche Ermittlung der aktuellen Messwerte vorgesehen ist,
• die Sensoren (10) mit einer Auswerteeinheit (20) versehen sind, welche gemessene Signalverläufe und Signaltrends analysiert,
• zur Übermittlung der jeweiligen Messwerte an die wenigstens eine Leitwarte (30) eine vollständige oder auch teilweise kabellose Datenübertragung vorgesehen ist, welche die Daten zu festgelegten Zeiten jeweils paketweise überträgt, und die Übertragung der Messsignale dynamisch vorgesehen ist,
**dadurch gekennzeichnet, dass**
• im Falle eines anomalen Messsignalverlaufs der jeweilige Sensor (10) die Messwerte in geringeren Zeitabständen zur Leitwarte (30) oder zu benachbarten Sensoren, mit welchen der jeweilige Sensor (10) durch eine gemeinsame Versorgungsleitung verbunden ist und welche eine gleiche oder physikalisch ähnliche Größe messen, übermittelt, und
• dabei nicht nur die Übertragungshäufigkeit des einen Sensors (10) erhöht wird, sondern auch die der benachbarten Sensoren.

2. Einrichtung nach Anspruch 1, **dadurch gekennzeichnet, dass** mittels des Leitsystems eine Konfiguration durchgeführt wird, welche benachbarten Sensoren mit welcher Übertragungshäufigkeit bei welchen Störungen wie lange aktiv sind.

3. Einrichtung, nach Anspruch 1 oder 2, **dadurch gekennzeichnet, dass** abhängig von dem Ergebnis der Auswertung die Signalverläufe verschiedenen Klassen zugeordnet werden.

4. Einrichtung nach einem der vorherigen Ansprüche, **dadurch gekennzeichnet, dass** in Abhängigkeit der Klassifizierung für jeden Signalverlauf die Übertragungshäufigkeit definiert ist.

5. Einrichtung nach einem der vorherigen Ansprüche, **dadurch gekennzeichnet, dass** die Sendehäufigkeit reduziert ist, wenn die durch den Sensor (10) gemessenen Signale einen im Rahmen des regulären Betriebs normalen Messsignalverlauf diagnostizieren.

6. Einrichtung nach einem der vorherigen Ansprüche, **dadurch gekennzeichnet, dass** eine Modellierung der Zusammenhänge zwischen den Positionen der Sensoren (10) und dem Versorgungsnetz (28) die Grundlage für ein intelligentes Sensornetz bildet, wobei diese entweder im Leitsystem oder auch in der Sensor-Auswerteeinheit abgelegt ist.

7. Einrichtung nach einem der vorherigen Ansprüche, **dadurch gekennzeichnet, dass** die Sensoren (10) sich miteinander direkt oder über das Leitsystem synchronisieren, wobei die Sensoren stets dann senden, wenn benachbarte Sensoren nicht senden.

8. Einrichtung nach einem der vorherigen Ansprüche, **dadurch gekennzeichnet, dass** die gemessenen Werte in einem im Sensor (10) vorgesehenen Speicher zwischengespeichert sind, von wo sie nach einer definierten Zeit in komprimierter Form versendet oder abgerufen werden.

9. Einrichtung nach einem der vorherigen Ansprüche, **dadurch gekennzeichnet, dass** der Sensor (10) die ermittelte Klassifizierungsinformation zusätzlich zum übermittelten Signal an ein in der Leitwarte (30) arbeitendes Entscheidungsunterstützungssystem übermittelt.

10. Einrichtung nach Anspruch 9, **dadurch gekennzeichnet, dass** das Entscheidungsunterstützungssystem ein konventionelles Alarmsystem ist, welches jedes Signal nur für sich einzeln betrachtet.

11. Einrichtung nach Anspruch 9, **dadurch gekennzeichnet, dass** das Entscheidungsunterstützungssystem den Systemzustand in seiner gesamten Komplexität analysiert und entsprechend den einzelnen und fusionierten Signalmesswerten, den einzelnen Systemzuständen, den daraus gewonnenen Informationen und dem eingelernten Expertenwissen das Bedienpersonal gezielt durch Aktionsvorschläge unterstützt.

12. Einrichtung nach Anspruch 11, **dadurch gekennzeichnet, dass** Fehler- und Diagnoseinformationen der Sensoren sowie Zustandsinformationen der Sensoren an das Leit- und Entscheidungsunterstützungssystem übermittelt und dort weiterverarbeitet werden.

13. Einrichtung nach einem der Ansprüche 9 bis 12, **dadurch gekennzeichnet, dass** das Leit- und Entscheidungsunterstützungssystem Arbeitsaufträge generiert.

14. Einrichtung nach Anspruch 13, **dadurch gekennzeichnet, dass** die Sensoren (10) eine eigene Signalvorverarbeitungs- und Diagnoseeinheit besitzen, welche in der Lage ist, fehlerhafte Signalzustände aus den gemessenen Signalen zu erkennen und zu klassifizieren sowie den Zustand des Sensors inklusive der an ihn angeschlossene Komponenten, wie Batterien, zu überwachen.

15. Einrichtung nach einem der vorherigen Ansprüche, **dadurch gekennzeichnet, dass** wenigstens ein Teil der Sensoren (10) sowohl mit einem Signalsender als auch mit einem Signalempfänger versehen ist, welche eine bidirektionale Kommunikation erlauben.

16. Einrichtung nach einem der vorherigen Ansprüche, **dadurch gekennzeichnet, dass** zur Schonung der Batterie solche Sensoren (10) vorgesehen sind, bei welchen die Wahl zwischen Sende- und Empfangsoptionen mit unterschiedlicher Ausnutzung der Batteriekapazität und abhängig von der Batteriekapazität möglich ist.

17. Verfahren zur Überwachung des Zustandes eines räumlich ausgedehnten Versorgungsnetzes mit Sensoren (10) zur Übertragung von aktuellen Messwerten zum Betriebsverhalten an wenigstens eine Leitwarte (30), die zur Überwachung und Steuerung des Versorgungsnetzes (28) dient, wobei
• an verschiedenen Positionen je ein Sensor (10) für die örtliche Ermittlung der aktuellen Messwerte vorgesehen ist,
• gemessene Signalverläufe und Signaltrends mit einer in den Sensoren (10) angeordneten Auswerteeinheit (20) analysiert werden,
• zur Übermittlung der jeweiligen Messwerte an die wenigstens eine Leitwarte (30) eine kabellose Datenübertragung vorgesehen ist, welche die Daten zu festgelegten Zeiten jeweils paketweise überträgt, und
• die Übertragung der Messsignale dynamisch erfolgt,
**dadurch gekennzeichnet, dass**
• im Falle eines anomalen Messsignalverlaufs die Messwerte des jeweiligen Sensors (10) in geringeren Zeitabständen zur Leitwarte (30) oder zu benachbarten Sensoren, mit welchen der jeweilige Sensor (10) durch eine gemeinsame Versorgungsleitung verbunden ist und welche eine gleiche oder physikalisch ähnliche Größe messen, übermittelt werden, und
• dabei nicht nur die Übertragungshäufigkeit des einen Sensors (10) erhöht wird, sondern auch die der benachbarten Sensoren.

18. Verfahren nach Anspruch 17, **dadurch gekennzeichnet, dass** die Klassifikationsmerkmale und Klassifikationsgrenzen so definiert werden, dass eine häufige Messsignalübertragung aufgrund fehlerhafter Klassifikation vermieden wird und so die Batterielebensdauer der Sensoren (10) deutlich erhöht wird.

19. Verfahren nach Anspruch 17 oder 18, **dadurch gekennzeichnet, dass** sobald ein von einem Sensor (10) generierter Alarm vom Bedienpersonal erkannt und bestätigt wurde, dies an den Sensor (10) zurückgemeldet wird, woraufhin dieser die Sendehäufigkeit wieder reduziert, um Energie zu sparen.

## Claims

1. Device for monitoring the state of a spatially extensive supply network (28) having sensors (10) for transmitting current measured values relating to the operating behaviour to at least one control room which is used to monitor and control the supply network (28), wherein
• a respective sensor (10) for locally determining the current measured values is provided at different positions,
• the sensors (10) are provided with an evaluation unit (20) which analyses measured signal profiles and signal trends,
• completely or else partially wireless data transmission is provided for the purpose of transmitting the respective measured values to the at least one control room (30) and respectively transmits the data in packets at defined times, and the transmission of the measurement signals is dynamically provided,
**characterized in that**
• in the event of an abnormal measurement signal profile, the respective sensor (10) transmits the measured values, at shorter intervals of time, to the control room (30) or to adjacent sensors to which the respective sensor (10) is connected by means of a common supply line and which measure an identical or physically similar variable, and
• not only the transmission frequency of the one sensor (10) but also that of the adjacent sensors is increased in the process.

2. Device according to Claim 1, **characterized in that** the control system is used to carry out a configuration of which adjacent sensors are active with which transmission frequency during which interference and for how long.

3. Device according to Claim 1 or 2, **characterized in that** the signal profiles are assigned to different classes depending on the result of the evaluation.

4. Device according to one of the preceding claims, **characterized in that** the transmission frequency is defined on the basis of the classification for each signal profile.

5. Device according to one of the preceding claims, **characterized in that** the transmission frequency is reduced if the signals measured by the sensor (10) diagnose a normal measurement signal profile during regular operation.

6. Device according to one of the preceding claims, **characterized in that** modelling of the relationships between the positions of the sensors (10) and the supply network (28) forms the basis for an intelligent sensor network, this modelling being stored either in the control system or in the sensor evaluation unit.

7. Device according to one of the preceding claims, **characterized in that** the sensors (10) are synchronized with one another directly or via the control system, the sensors always transmitting when adjacent sensors are not transmitting.

8. Device according to one of the preceding claims, **characterized in that** the measured values are buffered in a memory provided in the sensor (10), from where they are transmitted or retrieved in compressed form after a defined time.

9. Device according to one of the preceding claims, **characterized in that** the sensor (10) transmits the determined classification information, in addition to the transmitted signal, to a decision support system operating in the control room (30).

10. Device according to Claim 9, **characterized in that** the decision support system is a conventional alarm system which only considers each signal individually per se.

11. Device according to Claim 9, **characterized in that** the decision support system analyses the entire complexity of the system state and specifically supports the operating personnel by means of action proposals according to the individual and merged signal measured values, the individual system states, the information obtained therefrom and the learned expert knowledge.

12. Device according to Claim 11, **characterized in that** error and diagnostic information from the sensors and state information from the sensors is transmitted to the control and decision support system and is processed further there.

13. Device according to one of Claims 9 to 12, **characterized in that** the control and decision support system generates work orders.

14. Device according to Claim 13, **characterized in that** the sensors (10) have their own signal preprocessing and diagnostic unit which is able to identify and classify defective signal states from the measured signals and to monitor the state of the sensor, including the components connected to the latter, such as batteries.

15. Device according to one of the preceding claims, **characterized in that** at least some of the sensors (10) are provided both with a signal transmitter and with a signal receiver which allow bidirectional communication.

16. Device according to one of the preceding claims, **characterized in that**, in order to save the battery, those sensors (10) in which it is possible to choose between transmitting and receiving options with different utilization of the battery capacity and on the basis of the battery capacity are provided.

17. Method for monitoring the state of a spatially extensive supply network having sensors (10) for transmitting current measured values relating to the operating behaviour to at least one control room (30) which is used to monitor and control the supply network (28), wherein
• a respective sensor (10) for locally determining the current measured values is provided at different positions,
• measured signal profiles and signal trends are analysed using an evaluation unit (20) arranged in the sensors (10),
• wireless data transmission is provided for the purpose of transmitting the respective measured values to the at least one control room (30) and respectively transmits the data in packets at defined times, and
• the measurement signals are transmitted dynamically,
**characterized in that**
• in the event of an abnormal measurement signal profile, the measured values from the respective sensor (10) are transmitted, at shorter intervals of time, to the control room (30) or to adjacent sensors to which the respective sensor (10) is connected by means of a common supply line and which measure an identical or physically similar variable, and
• not only the transmission frequency of the one sensor (10) but also that of the adjacent sensors is increased in the process.

18. Method according to Claim 17, **characterized in that** the classification features and classification limits are defined in such a manner that frequent measurement signal transmission on account of incorrect classification is avoided and the battery lifetime of the sensors (10) is thus considerably increased.

19. Method according to Claim 17 or 18, **characterized in that**, as soon as an alarm generated by a sensor (10) has been identified and confirmed by the operating personnel, this is reported back to the sensor (10), whereupon the latter reduces the transmission frequency again in order to save energy.

## Revendications

1. Dispositif de surveillance de l'état d'un réseau d'alimentation étendu dans l'espace (28) comportant des capteurs (10) destinés à transmettre des valeurs de mesure actuelles concernant le comportement en fonctionnement à au moins une salle de commande qui sert à la surveillance et à la commande du réseau d'alimentation (28), dans lequel
• il est prévu un capteur (10) respectif en différentes positions pour la détermination locale des valeurs de mesure actuelles,
• les capteurs (10) sont pourvus d'une unité d'évaluation (20) qui analyse les courbes mesurées des signaux et les tendances des signaux,
• il est prévu, pour la transmission des valeurs de mesure respectives à l'au moins une salle de commande (30), une transmission de données entièrement ou même partiellement sans fil, qui transmet les données par paquets à des instants déterminés, la transmission des signaux de mesure étant effectuée de manière dynamique, **caractérisé en ce que**,
• dans le cas où la courbe des signaux de mesure est anormale, le capteur respectif (10) transmet les valeurs mesurées à des intervalles de temps plus courts à la salle de commande (30) ou à des capteurs adjacents auxquels le capteur respectif (10) est relié par une ligne d'alimentation commune et qui mesurent une grandeur identique ou physiquement semblable, et
• cela augmentant non seulement la fréquence de transmission dudit capteur (10), mais également celle des capteurs adjacents.

2. Dispositif selon la revendication 1, **caractérisé en ce qu'**il est procédé, au moyen du système de commande, à une configuration de ceux des capteurs qui sont adjacents, de leur fréquence de transmission, des perturbations associées et du temps pendant lequel ils sont actifs.

3. Dispositif selon la revendication 1 ou 2, **caractérisé en ce que** les courbes des signaux sont affectées à des classes différentes en fonction du résultat de l'évaluation.

4. Dispositif selon l'une des revendications précédentes, **caractérisé en ce que** la fréquence d'émission est définie pour chaque courbe de signal en fonction de la classification.

5. Dispositif selon l'une des revendications précédentes, **caractérisé en ce que** la fréquence d'émission est réduite lorsque les signaux mesurés par le capteur (10) diagnostiquent une courbe normale du signal de mesure dans le cadre d'un fonctionnement régulier.

6. Dispositif selon l'une des revendications précédentes, **caractérisé en ce qu'**une modélisation des relations entre les positions des capteurs (10) et le réseau d'alimentation (28) forme la base d'un réseau de capteurs intelligent, laquelle modélisation est stockée soit dans le système de commande, soit dans l'unité d'évaluation des capteurs.

7. Dispositif selon l'une des revendications précédentes, **caractérisé en ce que** les capteurs (10) se synchronisent les uns avec les autres directement ou par l'intermédiaire du système de commande, dans lequel les capteurs transmettent en permanence lorsque les capteurs adjacents ne transmettent pas.

8. Dispositif selon l'une des revendications précédentes, **caractérisé en ce que** les valeurs mesurées sont temporairement stockées dans une mémoire prévue dans le capteur (10), d'où elles sont transmises ou récupérées sous forme comprimée après un temps défini.

9. Dispositif selon l'une des revendications précédentes, **caractérisé en ce que** le capteur (10) transmet les informations de classification déterminées en plus du signal transmis à un système d'aide à la décision fonctionnant dans la salle de commande (30).

10. Dispositif selon la revendication 9, **caractérisé en ce que** le système d'aide à la décision est un système d'alarme conventionnel qui considère chaque signal pris individuellement.

11. Dispositif selon la revendication 9, **caractérisé en ce que** le système d'aide à la décision analyse l'état du système dans toute sa complexité et apporte une assistance ciblée au personnel d'exploitation au moyen de propositions d'action en fonction des valeurs de mesure des signaux individuels et fusionnés, des états individuels du système, des informations obtenues à partir de ceux-ci et des connaissances spécialisées acquises.

12. Dispositif selon la revendication 11, **caractérisé en ce que** des informations d'erreur et de diagnostic des capteurs et des informations d'état des capteurs sont transmises au système de commande et d'aide à la décision et y sont soumises à un traitement supplémentaire.

13. Dispositif selon l'une des revendications 9 à 12, **caractérisé en ce que** le système de commande et d'aide à la décision génère des ordres de travail.

14. Dispositif selon la revendication 13, **caractérisé en ce que** les capteurs (10) possèdent leur propre unité de prétraitement et de diagnostic des signaux, qui est capable de détecter et de classer les états de signaux défectueux à partir des signaux mesurés et de surveiller l'état du capteur, y compris les composants qui lui sont connectés, tels que des batteries.

15. Dispositif selon l'une des revendications précédentes, **caractérisé en ce qu'**au moins certains des capteurs (10) sont dotés à la fois d'un émetteur de signal et d'un récepteur de signal qui permettent une communication bidirectionnelle.

16. Dispositif selon l'une des revendications précédentes, **caractérisé en ce que**, pour protéger la batterie, il est prévu des capteurs (10) dans lesquels il est possible de choisir entre des options d'émission et de réception avec une utilisation différente de la capacité de la batterie et en fonction de la capacité de la batterie.

17. Procédé de surveillance de l'état d'un réseau d'alimentation étendu dans l'espace comportant des capteurs (10) destinés à transmettre des valeurs de mesure actuelles concernant le comportement en fonctionnement à au moins une salle de commande (30) qui sert à la surveillance et à la commande du réseau d'alimentation (28), dans lequel
• il est prévu un capteur (10) respectif en différentes positions pour la détermination locale des valeurs de mesure actuelles,
• les courbes mesurées des signaux et les tendances des signaux sont analysées au moyen d'une unité d'évaluation (20) disposée dans les capteurs (10),
• il est prévu, pour la transmission des valeurs de mesure respectives à l'au moins une salle de commande (30), une transmission de données sans fil, qui transmet les données par paquets à des instants déterminés, et
• la transmission des signaux de mesure est effectuée de manière dynamique,
**caractérisé en ce que**,
• dans le cas où la courbe des signaux de mesure est anormale, les valeurs de mesure du capteur respectif (10) sont transmises à des intervalles de temps plus courts à la salle de commande (30) ou à des capteurs adjacents auxquels le capteur respectif (10) est relié par une ligne d'alimentation commune et qui mesurent une grandeur identique ou physiquement semblable, et
• cela augmentant non seulement la fréquence de transmission dudit capteur (10), mais également celle des capteurs adjacents.

18. Procédé selon la revendication 17, **caractérisé en ce que** les caractéristiques de classification et les limites de classification sont définies de manière à éviter une transmission fréquente de signaux de mesure en raison d'une classification incorrecte et à augmenter ainsi sensiblement la durée de vie de la batterie des capteurs (10).

19. Procédé selon la revendication 17 ou 18, **caractérisé en ce que**, dès qu'une alarme générée par un capteur (10) est détectée et confirmée par le personnel d'exploitation, celle-ci est renvoyée au capteur (10), cela réduisant à nouveau la fréquence d'émission à des fins d'économie d'énergie.
